Europäisches Patentamt

European Patent Office

Office européen des brevets

(19)

(11) **EP 1 056 579 B1**

(12) **EUROPÄISCHE PATENTSCHRIFT**

(45) Veröffentlichungstag und Bekanntmachung des Hinweises auf die Patenterteilung:
**24.04.2002   Patentblatt 2002/17**

(51) Int Cl.[7]: **B29C 43/00**, B29C 45/00, C08L 33/12, C08F 20/14

(21) Anmeldenummer: **99913160.0**

(22) Anmeldetag: **12.02.1999**

(86) Internationale Anmeldenummer:
**PCT/EP99/00934**

(87) Internationale Veröffentlichungsnummer:
**WO 99/42271 (26.08.1999 Gazette 1999/34)**

(54) **VERARBEITUNG VON THERMOPLASTISCHEN PMMA-FORMMASSEN AUF BUNTMETALLHALTIGEN WERKZEUGEN**

PROCESSING OF THERMOPLASTIC PMMA SHAPED MATERIALS INTO TOOLS CONTAINING NON-FERROUS METALS

FABRICATION D'ARTICLES A BASE D'UNE MATIERE MOULABLE DE PMMA THERMOPLASTIQUE EN UTILISANT DES OUTILS EN METAUX NON FERREUX

(84) Benannte Vertragsstaaten:
**DE FR GB IT NL**

(30) Priorität: **18.02.1998   DE 19806749**

(43) Veröffentlichungstag der Anmeldung:
**06.12.2000   Patentblatt 2000/49**

(73) Patentinhaber: **Röhm GmbH & Co. KG**
**64293 Darmstadt (DE)**

(72) Erfinder:
• **KEMPF, Peter**
  **D-63517 Rodenbach (DE)**
• **BRAND, Norbert**
  **D-64291 Darmstadt (DE)**
• **SCHWIND, Helmut**
  **D-63457 Hanau (DE)**
• **ROTH, Stefan**
  **D-64287 Darmstadt (DE)**

• **MORITZ, Holger**
  **D-55128 Mainz (DE)**

(56) Entgegenhaltungen:
  **US-A- 5 376 317**

• **PATENT ABSTRACTS OF JAPAN vol. 002, no. 155 (C-032), 26. Dezember 1978 & JP 53 121890 A (MITSUBISHI CHEM IND LTD), 24. Oktober 1978**
• **PATENT ABSTRACTS OF JAPAN vol. 002, no. 155 (C-032), 26. Dezember 1978 & JP 53 121891 A (MITSUBISHI CHEM IND LTD), 24. Oktober 1978**
• **PATENT ABSTRACTS OF JAPAN vol. 002, no. 155 (C-032), 26. Dezember 1978 & JP 53 121892 A (MITSUBISHI CHEM IND LTD), 24. Oktober 1978**

**Beschreibung**

Die vorliegende Erfindung betrifft ein Verfahren zur Herstellung von Formkörpern aus thermoplastischer PMMA-Formmasse, insbesondere durch Formpressen oder Spritzgießen.

Formteile aus Kunststoffen werden, sofern sie in großen Stückzahlen benötigt werden, wirtschaftlich im Spritzgießverfahren hergestellt. Haben solche Formteile eine komplizierte Formteilgeometrie, die mit höchster Präzision abgeformt werden soll, so integriert man oft in die Spritzgießwerkzeuge galvanisch aufgebaute Einsätze, sogenannte Galvanos. Diese Technik bietet den Vorteil, daß von einem "Master" viele Galvanoeinsätze abgenommen werden können und damit die Werkzeugkosten gesenkt werden können. Bei der Verarbeitung von PMMA-Formmassen auf buntmetallhaltigen Werkzeugen, z. B. den oben beschriebenen Galvanos, bzw. Maschinenteilen werden je nach Einsatzgebiet und Verarbeitungsparametern mehr oder weniger starke Verschleißerscheinungen beobachtet. Dadurch werden Werkzeuge bzw. Maschinenteile nach einer gewissen Zeit unbrauchbar bzw. die erzeugten Formteile haben nicht mehr die geforderte Qualität. Hauptproblem ist hierbei die Schädigung der Oberfläche (Politur). Durch Abblättern von schwarzen Belägen der Werkzeug- bzw. Maschinenteile kann es aber auch zu Verunreinigungen in Formteilen kommen.

Man nahm bisher an, daß diese Probleme durch die sehr hohen Temperaturen, die durch die Kompression von Luft in den Gußwerkzeugen entstehen, verursacht werden. Insbesondere in schmalen Vertiefungen der Formen bleiben kleine Luftblasen zurück, die beispielsweise durch den Einspritzdruck stark komprimiert werden. Die Hersteller von PMMA-Formmassen empfehlen daher zur Vermeidung der oben genannten Probleme die Form gut zu entlüften oder bei möglichst niedriger Temperatur zu arbeiten.

In Anbetracht des Standes der Technik ist es nun Aufgabe der vorliegenden Erfindung den Verschleiß der buntmetallhaltigen Werkzeuge bzw. Maschinenteile wirksam zu reduzieren.

Weiters ist es Aufgabe der Erfindung die Qualität von PMMA-Formteilen zu verbessern, insbesondere im Hinblick auf deren Reinheit und Oberflächengüte.

Gelöst werden diese Aufgaben sowie weitere nicht explizit genannte Aufgaben, die aus den hierin diskutierten Zusammenhängen ableitbar oder erschließbar sind, durch die im Anspruch 1 beschriebenen Maßnahmen. Zweckmäßige Abwandlungen des erfindungsgemäßen Verfahrens werden in den auf Anspruch 1 rückbezogenen Unteransprüchen unter Schutz gestellt.

Dadurch, daß man im wesentlichen schwefelfreie thermoplastische PMMA-Formmasse zur Herstellung von Formkörpern mit buntmetallhaltigen Werkzeugen verwendet, gelingt die effektive Reduktion des Verschleißes der buntmetallhaltigen Werkzeuge bzw. Maschinenteile. Insbesondere wird unter anderem die chemische Korrosion der Metalle zu den Metallsulfiden verhindert. Dies ist überraschend, da der Schwefelgehalt der handelsüblichen Formmassen nur 500 bis 800 ppm beträgt. Des weiteren stammt ein Großteil des Schwefelgehalts von sog. Molekulargewichtsreglern. Diese werden jedoch größtenteils über kovalente Bindungen in das Polymer eingebaut.

Der Begriff "im wesentlichen schwefelfrei" bedeutet, daß keine schwefelhaltigen Regler eingesetzt werden und daß der Schwefelgehalt der PMMA-Formmassen geringer als 50 ppm, bevorzugt geringer als 30 ppm, besonders bevorzugt geringer als 10 ppm und ganz besonders bevorzugt geringer als 5 ppm ist.

Thermoplastische PMMA-Formmassen sind Homo- oder Copolymere, die durch Polymerisation von Methylmethacrylat allein oder in Kombination mit einem oder mehreren ethylenisch ungesättigten Monomeren erhältlich sind und die thermoplastisch verarbeitet werden können.

Buntmetallhaltige Werkzeuge sind Werkzeuge, insbesondere Einsätze, Düsen und Kanäle, die Buntmetalle enthalten. Unter Buntmetallen sind Metalle zu verstehen, die schwerlösliche Sulfide bilden. Hierzu gehören u. a., ohne daß hierdurch eine Einschränkung erfolgen soll, Nickel, Kupfer und Legierungen dieser beiden Metalle miteinander bzw. mit anderen Metallen wie z. B. Beryllium, Zink oder Zinn.

Die Herstellung von Formkörpern aus den oben erwähnten PMMA-Massen kann auf jede dem Fachmann bekannte Art erfolgen. Hierzu gehören insbesondere die Extrusion, das Spritzgießen und das Formpressen, bevorzugt ist hiervon das Spritzgießen und das Formpressen.

Die oben erwähnten PMMA-Formmassen sind Formmassen, die auf PMMA-Homo- und/oder Copolymeren beruhen, welche erhältlich sind durch die Polymerisation von

(i) 5 bis 100 Gew.-%, vorzugsweise 50 bis 100 Gew.-% und besonders bevorzugt 80 bis 100 Gew.-% Methylmethacrylat (MMA)

(ii) 0 bis 95 Gew.-%, vorzugsweise 0 bis 50 Gew.-% und besonders bevorzugt 0 bis 20 Gew.-% eines oder mehrerer ethylenisch ungesättigter mit (i) copolymerisierbaren Monomere,

wobei (i) und (ii) zusammen 100 Gew.-% ergeben,

(iii) 0,05 bis 5 Gew.-%, bezogen auf 100 Gew.-% der Summe aus (i) und (ii), wenigstens eines im wesentlichen schwefelfreien Molekulargewichtsreglers, und

(iv) bis 100 Gew.-% relativ zu der Summe aus (i) und (ii), für thermoplastische Formmassen übliche Zusätze,

und welche ein durchschnittliches Gewichtsmittel des Molekulargewichts $\overline{M}_w$ im Bereich von 2 x 10$^4$ bis 3 x 10$^5$, vorzugsweise 5 x 10$^4$ bis 2,5 x 10$^5$ und besonders bevorzugt 8 x 10$^4$ bis 2 x 10$^5$ aufweisen.

Die Komponente (i) ist kommerziell erhältlich. Ihr Gewichtsanteil beträgt 5 bis 100 Gew.-%, vorzugsweise 50 bis 100 Gew.-% und besonders bevorzugt 80 bis 100 Gew.-%. Ist der Gewichtsanteil kleiner als 5 Gew.-%, so treten die Eigenschaften der Methylmethacrylat-Komponenten nicht in Erscheinung.

Zu oben erwähnten ethylenisch ungesättigten Monomeren, die als Komponente (ii) in den PMMA-Formmassen neben Methylmethacrylat enthalten sein können, gehören u. a. Vinylester, Ester der Acrylsäure, beispielsweise Methyl- und Ethylacrylat, Ester der Methacrylsäure, die sich von Methylmethacrylat unterscheiden, beispielsweise tert-Butylmethacrylat, n-Butylmethacrylat und Ethylhexylmethacrylat sowie Cycloalkylacrylate und Cycloalkylmethacrylate, Vinylchlorid, Vinylidenchlorid, Vinylacetat, Styrol, substituierte Styrole mit einem Alkylsubstituenten in der Seitenkette, wie z. B. α-Methylstyrol und α-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole, Vinylund Isopropenylether, Maleinsäurederivate, wie beispielsweise Maleinsäureanhydrid, Methylmaleinsäureanhydrid, Maleinimid, Methylmaleinimid, Phenylmaleinimid und Cyclohexylmaleinimid, und Diene, wie beispielsweise 1,3-Butadien und Divinylbenzol, bevorzugt sind Acrylester, Methacrylsäureester, die von (i) verschieden sind, Vinylacetat, Vinylchlorid, Vinylidenchlorid, Styrol, α-Methylstyrol, halogensubstituierte Styrole, Vinylether, Isopropenylether und Diene.

Alle oben genannten Monomere sind kommerziell erhältlich. Sie werden in einer Menge von 0 bis 95 Gewichts-%, vorzugsweise 0 bis 50 Gew.-% und besonders bevorzugt 0 bis 20 Gew.-% bezogen auf die Gesamtmenge der monomeren Komponenten, mit Methylmethacrylat copolymerisiert. Ist der Gewichtsanteil größer als 95 %, so treten die Eigenschaften der Methacrylsäure-Komponente (i) nicht in Erscheinung.

Als erfindungsgemäße Komponente (iii) muß zur Steuerung des Molekulargewichts ein schwefelfreier Regler eingesetzt werden.

Erfindungsgemäße schwefelfreie Molekulargewichtsregler sind beispielsweise, ohne daß hierdurch eine Einschränkung erfolgen soll, dimeres α-Methylstyrol (2,4 Diphenyl-4-methyl-1-penten), Enolether aliphatischer und/oder cycloaliphatischer Aldehyde, Terpene, β-Terpinen, Terpinolen, 1,4-Cyclohexadien, 1,4-Dihydronaphthalin, 1,4,5,8-Tetrahydronaphthalin, 2,5-Dihydrofuran, 2,5-Dimethylfuran und/oder 3,6-Dihydro-2H-pyran, bevorzugt ist dimeres α-Methylstyrol.

Die schwefelfreien Molekulargewichtsregler werden in einer Menge im Bereich von 0,05 bis 5 Gew.-%, bevorzugt 0,1 bis 2 Gew.-%, bezogen auf 100 Gew.-% der monomeren Komponenten eingesetzt. Ist der Gewichtsanteil des Molekulargewichtsreglers größer als 5 Gew.-%, so wird das Gewichtsmittel des Molekulargewichts des Polymeren zu klein. Ist der Gewichtsanteil des Molekulargewichtsreglers kleiner als 0,05 Gew.-%, so wird das Gewichtsmittel des Molekulargewichts des Polymeren zu groß.

Diese Regler sind handelsüblich. Sie lassen sich aber auch auf dem Fachmann bekannte Weise herstellen. So wird die Herstellung von dimerem α-Methylstyrol in der Patentschrift DE 966 375 beschrieben. Enolether aliphatischer und/oder cycloaliphatischer Aldehyde sind in der Patentschrift DE 3 030 373 offenbart. Die Darstellung von Terpenen wird in der EP 80 405 erläutert. Die Offenlegungsschriften JP 78/121 891 und JP 78/121 890 erläutern die Darstellung von β-Terpinen, Terpinolen, 1,4-Cyclohexadien, 1,4-Dihydronaphthalin, 1,4,5,8-Tetrahydronaphthalin. Die Herstellung von 2,5-Dihydrofuran, 2,5-Dimethylfuran und 3,6-Dihydro-2H-pyran wird in der Offenlegungsschrift DE 2 502 283 dargestellt.

Als Komponente (iv) können die PMMA-Formmassen für thermoplastische Formmassen übliche Zusätze erhalten.

Beispielhaft seien folgende Zusatzstoffe genannt:
Antistatika, Antioxidantien, Biostabilisatoren, chemische Treibmittel, Entformungsmittel, Flammschutzmittel, Schmiermittel, Farbmittel, Fließverbesserungsmittel, Füllstoffe, Gleitmittel, Lichtschutzmittel, optische Aufheller, organische Phosphite, Pigmente, Schlagzähigkeitsverbesserer, Vernetzungsmittel, Verstärkungsmittel, Verstärkungsfasern, Verwitterungsschutzmittel und Weichmacher. Bei der Auswahl geeigneter Zusatzstoffe muß darauf geachtet werden, daß diese im wesentlichen schwefelfrei sind.

Die Zusatzstoffe werden in üblicher Menge, d. h. bis zu 100 Gew.-%, vorzugsweise bis zu 10 Gew.-% relativ zu der Summe aus (i) und (ii) eingesetzt. Ist die Menge größer als 100 Gew.-% relativ zu der Summe aus (i) und (ii), so können Eigenschaften der Formmasse, wie beispielsweise die Verarbeitbarkeit und/oder die mechanischen Eigenschaften, nachteilig beeinflußt werden.

Die erfindungsgemäß verwendbaren Formmassen können zur Modifikation von Eigenschaften andere Polymere enthalten. Diese Polymermischungen sind dem Fachmann als "blends" bekannt. Zu diesen Polymeren gehören beispielsweise, ohne daß hierdurch eine Einschränkung erfolgen soll, alle die durch radikalische Polymerisation der oben genannten Monomere oder Mischungen dieser Monomere entstehen, sowie Polycarbonate, Polyester, Polyamide, Polyimide, Polyurethane und Polyether.

Das Gewichtsmittel des Molekulargewichts $\overline{M}_w$ der erfindungsgemäß zu verwendenden Homo- und/oder Copolymere liegt im allgemeinen im Bereich zwischen 20 000 und 300 000, vorzugsweise 50 000 bis 250 000 und besonders bevorzugt 80 000 bis 200 000. Ist das Gewichtsmittel des Molekulargewichts kleiner als 20 000, so verliert die Formmasse ihre mechanischen Eigenschaften. Ist das Gewichtsmittel des Molekulargewichts hingegen größer als 300 000, so kann die Formmasse nur schlecht thermoplastisch verarbeitet werden.

Die Herstellung der oben erwähnten erfindungsgemäß zu verwendenden PMMA-Homo- und/oder Copolymere nach den verschiedenen Verfahren der radikalischen Polymerisation ist an sich bekannt. So können die Polymere in Substanz-, Lösungs-, Suspensions- oder Emulsionspolymerisation hergestellt werden. Die Substanzpolymerisation ist beispielhaft in Houben-Weyl, Band E20, Teil 2 (1987), S. 1145ff. beschrieben. Wertvolle Hinweise hinsichtlich der Lösungspolymerisation finden sich eben dort auf S. 1156ff. Erläuterungen zur Suspensionspolymerisationstechnik finden sich eben dort auf S. 1149ff., während die Emulsionspolymerisation eben dort auf S. 1150ff. ausgeführt und erläutert wird.

Erfindungsgemäß einzusetzenden Polymere lassen sich günstigerweise zu Kunststofformmassen in Granulatform verarbeiten. Diese Formmassengranulate sind dann für die weitere Verarbeitung durch Formpressen, Extrusion oder Spritzgießen besonders geeignet. Die Herstellung der Formmassengranulate erfolgt durch Extrusion und Granulation der in Platten oder Perlform angefallenen Kunststoffe, wobei niedermolekulare Begleitstoffe von den Polymeren durch Entgasung im Extruder abgetrennt und die oben erwähnten Zusatzstoffe während des Extrusionsvorgangs beigemischt werden können. Ein derartiges Verfahren wird z.B. im Handbuch der Kunststoff-Extrusionstechnik, Bd. I und II (Hrsg.: F. Heusen, W. Kappe, H. Potente; Hauser Verlag 1986 und 1989) beschrieben.

Die besondere wirtschaftliche Bedeutung des erfindungsgemäßen Verfahrens ist überall dort gegeben, wo aus technischen Gründen nur Werkzeuge aus Buntmetallen verwendet werden können bzw. wo sich durch Einsatz dieser Metalle ein wirtschaftlicher Vorteil ergibt.

So können Mikrostrukturen oder spezielle optische Strukturen oft nur durch galvanische Abformtechnik hergestellt werden. Formwerkzeuge, mit denen Reflektoren oder Rückstrahler für Fahrzeuge hergestellt werden, werden beispielsweise aus Paketen von äußerst präzise geschliffenen und polierten Stahlstiften aufgebaut. Diese Werkzeuge sind sehr teuer, so daß aus Kostengründen von einem Stahlstiftpaket viele galvanische Nickelabzüge hergestellt werden, um diese als Werkzeugeinsätze zu verwenden.

Aufgrund der guten Wärmeleitfähigkeit werden in Werkzeugen und Maschinen oft Heißkanaldüsen oder Verteilerkanäle aus Kupferlegierungen eingesetzt. In Kontakt mit einer schwefelhaltigen Schmelze bildet sich ein schwarzer Belag auf der Oberfläche, aus dem schwarze Partikel in das Formteil "geschleppt" werden. Diese schwarzen Partikel stören insbesondere bei optischen Anwendungen (Lupen, Linsen, Lichtleiter und Sichtteile) und führen zu Ausschuß.

Die erfindungsgemäße Verwendung verringert diese Nachteile.

Die nachfolgenden Beispiele dienen ebenso wie die beigefügten Figuren zur Veranschaulichung des Gegenstandes der Erfindung.

In den Figuren zeigen:

Abbildung 1: Werkzeugeinsatz indem eine Formmasse mit 725 ppm Schwefelgehalt 34 mal abgeformt wurde.

Abbildung 2: Werkzeugeinsatz indem eine Formmasse mit 630 ppm Schwefelgehalt 100 mal abgeformt wurde.

Abbildung 3: Werkzeugeinsatz indem eine Formmasse ohne meßbaren Schwefelgehalt 360 mal abgeformt wurde.

Abbildung 4: REM Aufnahme der Oberfläche eines Werkzeugeinsatzes indem eine Formmasse mit 725 ppm Schwefelgehalt 34 mal abgeformt wurde.

Abbildung 5: REM Aufnahme der Oberfläche eines Werkzeugeinsatzes indem eine Formmasse mit 630 ppm Schwefelgehalt 100 mal abgeformt wurde.

Abbildung 6: REM Aufnahme der Oberfläche eines Werkzeugeinsatzes indem eine Formmasse ohne meßbaren Schwefelgehalt 360 mal abgeformt wurde.

Abbildung 7: REM-Spektrum der Oberfläche eines Werkzeugeinsatzes indem eine Formmasse mit 725 ppm Schwefelgehalt 34 mal abgeformt wurde.

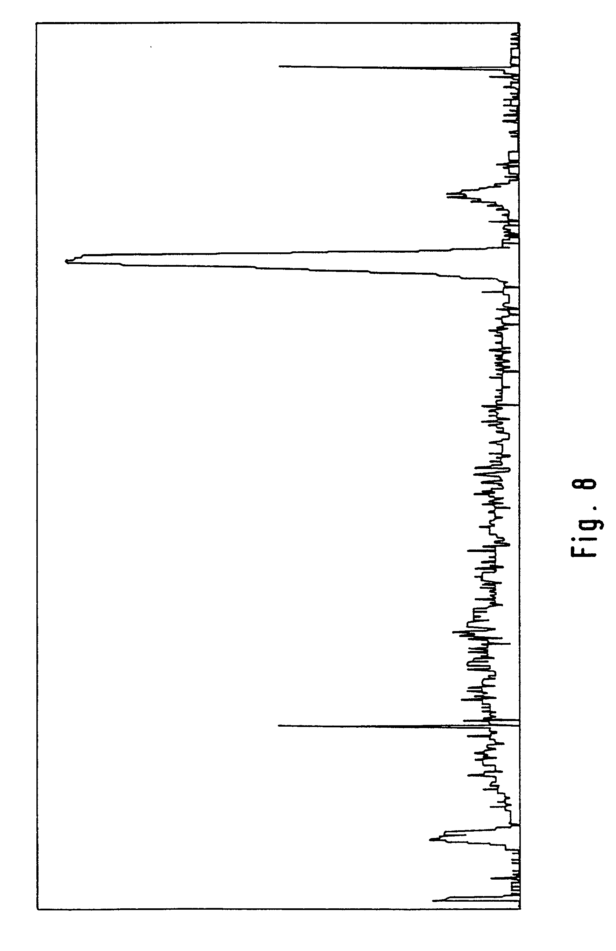

Abbildung 8: REM-Spektrum der Oberfläche eines Werkzeugeinsatzes indem eine Formmasse mit 630 ppm Schwefelgehalt 100 mal abgeformt wurde.

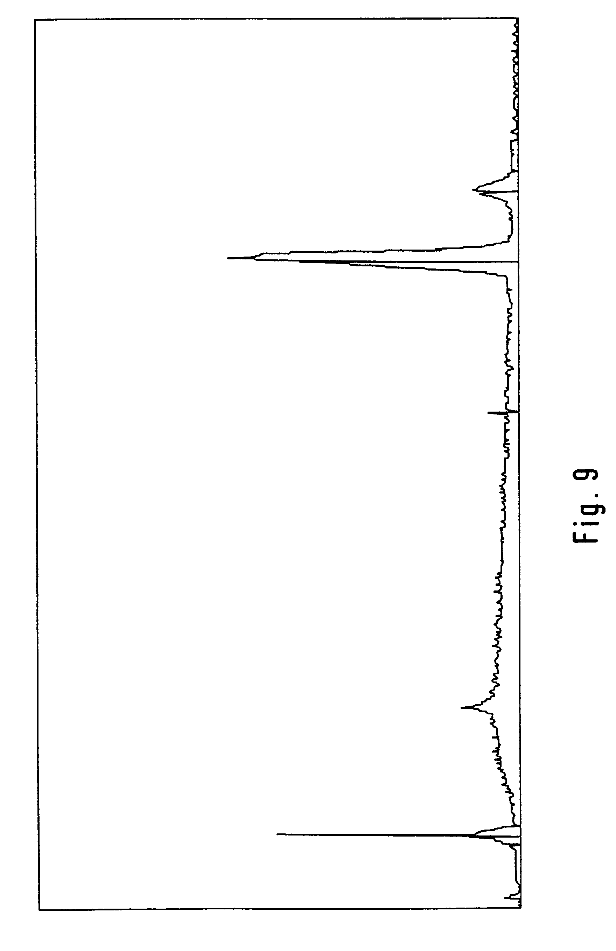

Abbildung 9:   REM-Spektrum der Oberfläche eines Werkzeugeinsatzes indem eine Formmasse ohne meßbaren Schwefelgehalt 360 mal abgeformt wurde.

Beispiel 1

Herstellungsbeispiel:

Eine Lösung aus 940 Teilen Methylmethacrylat (MMA), 60 Teilen n-Butylacrylat, 8 Teilen dimeres α-Methylstyrol und 9 Teilen Dilauroylperoxid wurde in 2000 Teilen Wasser, in dem 1,1 Teile des Ammoniumsalzes eines wasserlöslichen Coplymeren aus MMA und Methacrylsäure gelöst waren, suspendiert und nach dem Suspensionsverfahren 2 Stunden bei 78 °C und 1 Stunde bei 49 °C polymerisiert.

Die erhaltenen Polymerisationsperlen wurden abfiltriert, gründlich mit vollentsalztem Wasser ausgewaschen und bei 80 °C getrocknet. Es wurden 970 Teile klarer Polymerisatperlen mit einem Schmelzindex nach DIN 7745 von 2,8 g/10 min erhalten.

Beispiel 2

Herstellungsbeispiel:

In einem 5l Polymerisationsgefäß, ausgestattet mit Rührer, Rückflußkühler und Thermometer, wurde ein Gemisch aus 3200 g vollentsalztem Wasser und 64 g einer 6 prozentigen wäßrigen Lösung des Ammoniumsalzes eines Methylmethacrylatmethacrylsäure-Copolymeren auf 40 °C erwärmt. Unter Rühren wurden nun 1600 g eines Gemisches aus 92,4 Gewichtsteilen Methylacrylat, 5,9 Gewichtsteilen n-Butylacrylat, 0,8 Gewichtsteilen dimeres α-Methylstyrol und 0,9 Gewichtsteilen Dilauroylperoxid zugegeben. Der Ansatz wurde 2 Stunden bei 78 °C und 1 Stunde bei 98 °C polymerisiert und dann auf Raumtemperatur abgekühlt. Die Polymerisatperlen wurden abfiltriert, gründlich mit vollentsalztem Wasser ausgewaschen und in einem Wirbelbett-Trockner bei 80 °C getrocknet.

Es wurden 1565 g klare Polymerisatperlen mit einem Schmelzindex nach DIN 7745 von 2,4 g/ 10 min erhalten.

Beispiel 3

Formpressen:

Es wurden 3 PMMA-Formmassen mit unterschiedlichem Schwefelgehalt geprüft:

Plexiglas® 7 N von Röhm dessen Schwefelgehalt ca. 725 ppm betrug,

Lucryl® G 66 Q 14 von BASF dessen Schwefelgehalt ca. 630 ppm betrug und

eine gemäß Beispiel 2 hergestellte Formmasse deren Schwefelgehalt nicht nachweisbar war.

Das Formpressen findet bei folgenden Verarbeitungsparametern statt:

| Werkzeugtemperaturen | ca. 160-200°C |
|---|---|
| Preßdruck | 100 bis 500 bar |
| Preßzeit | 5 bis 60 Minuten. |

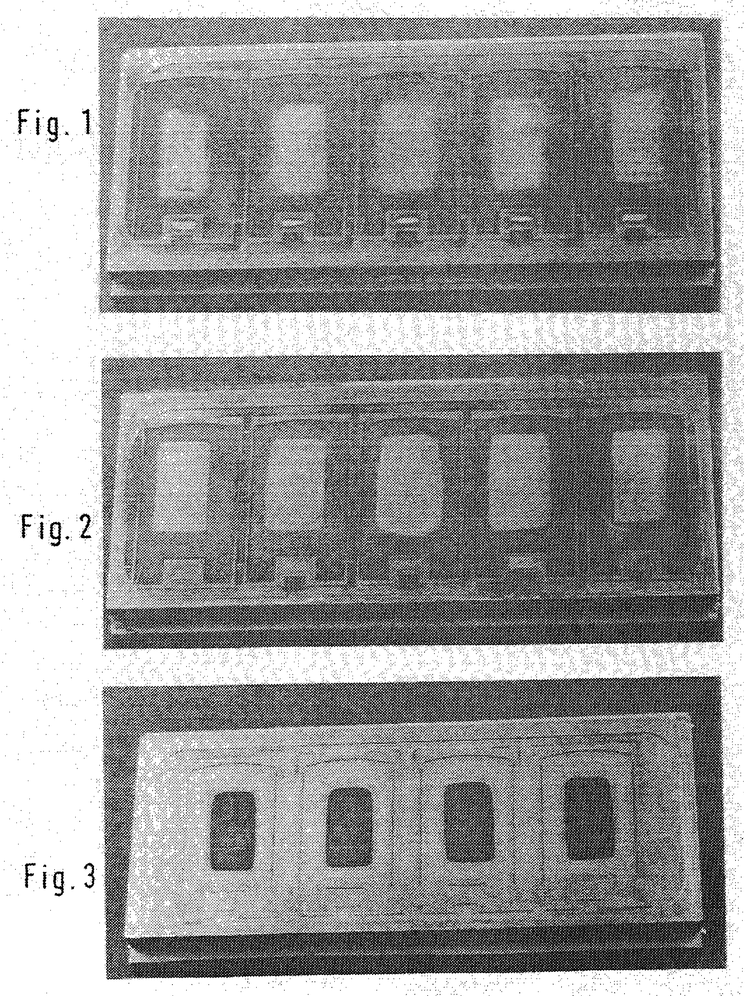

In den Abbildungen 1 und 2 ist dargestellt, daß die Werkzeugansätze bei diesem Verfahren von schwefelhaltigen Formmassen sehr schnell korrodiert und dadurch unbrauchbar werden. Die abgebildeten Werkzeugteile besitzen fünf Formen. Die formgebenden Bereiche befinden sich am Rand der einzelnen Formen. Dort tritt die störende Korrosion auf.

Abhängig vom Schwefelgehalt und den Verarbeitungsparametern wurden folgende Standzeiten erreicht:

| 725 ppm Schwefel | nach 34 Abformungen unbrauchbar (siehe Abb. 1) |
|---|---|

(fortgesetzt)

| 630 ppm Schwefel | nach 100 Abformungen unbrauchbar (siehe Abb. 2) |
| kein Schwefel | nach 360 Abformungen noch unbeschädigt (siehe Abb. 3). |

Die Nickeloberfläche der Werkzeugeinsätze in denen schwefelhaltige Formmassen verarbeitet wurden, läuft schwarz an, wobei an den betroffenen Stellen Schwefel nachweisbar ist.

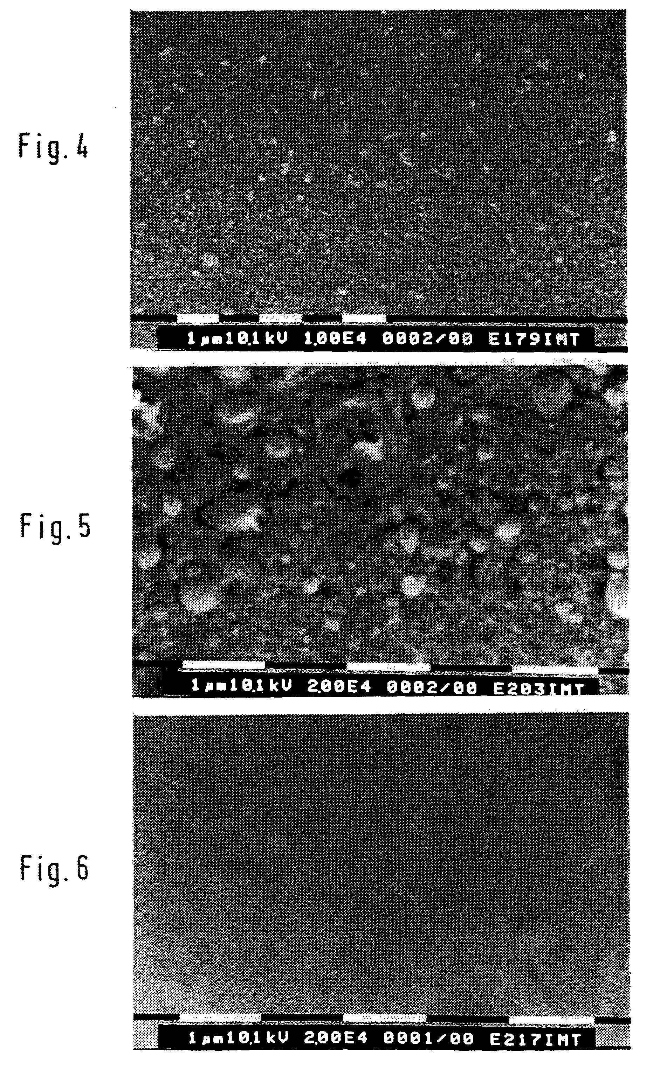

Die entsprechenden Analysen wurde anhand der obengenannten Werkzeugeinsätze durchgeführt. Die Abbildungen 4 (34 Abformungen, Schwefelgehalt 725 ppm), 5 (100 Abformungen Schwefelgehalt 630 ppm) und 6 (360 Abformungen, kein Schwefelgehalt) zeigen REM-Aufnahmen der Werkzeugeinsätze. Der Verschleiß der Oberfläche ist in den Abbildungen 4 und 5 deutlich durch eine rauhe Oberfläche im Vergleich zu der in Abbildung 6 dargestellten zu erkennen.

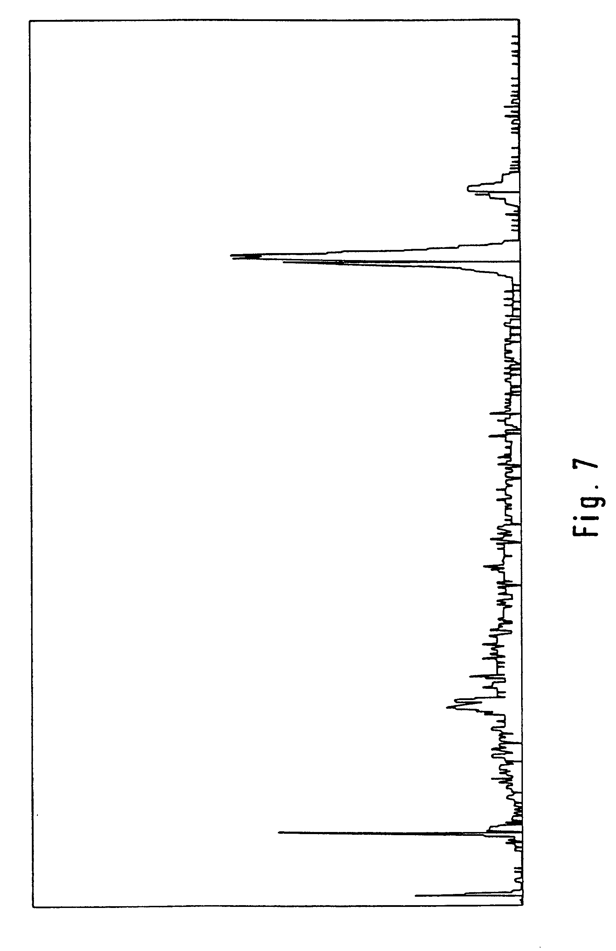

Die Abbildung 7 (34 Abformungen, Schwefelgehalt 725 ppm), 8 (100 Abformungen Schwefelgehalt 630 ppm) und 9 (360 Abformungen, kein Schwefelgehalt) stellen REM-Spektren dar, aus denen der Schwefelgehalt der Oberfläche der Werkzeugeinsätze hervorgeht.

Der Nachweis von Schwefel unter dem REM-Mikroskop erfolgt durch energiedispersive Röntgenmikroanalyse. Hierbei wird die Probe mit einem Elektronenstrahl (20 000 V) angeregt. Die in der Probe vorhandenen Elemente mit einer Ordnungszahl größer 12 emittieren durch die Anregung Röntgenstrahlen. Jedes Element emittiert charakteristische Energien, wobei die Menge (Häufigkeit) der emittierten Strahlung ein Maß für den Gehalt des Elements in der Probe ist. Als Detektor dient ein Vielkanalanalysator (1024 Kanäle ä 20 eV).

Es zeigt sich, daß die Oberfläche der Werkzeugeinsätze in denen schwefelhaltige Formmassen verarbeitet wurden, Schwefel enthalten, der sich auf den Oberfläche des Werkzeugeinsatzes indem keine schwefelhaltige Formmasse verarbeitet wurde, nicht nachweisen läßt.

Beispiel 4

Spritzgießen mit Messingeinsätzen:

Es wurden folgende Formmassen verwendet:

Resarit® 830 ZK von Resart-IHM AG dessen Schwefelgehalt 365 ppm betrug,
Degalan® G 7 E von Degussa dessen Schwefelgehalt 520 ppm betrug, und
eine gemäß Beispiel 2 hergestellte Formmasse deren Schwefelgehalt nicht nachweisbar war.

Das Spritzgießen findet bei folgenden Verarbeitungsparametern statt:

| | |
|---|---|
| Massetemperaturen | 220-260°C |
| Werkzeugtemperaturen | 60-80°C |
| Spritzdruck | 500-1000 bar |
| Zykluszeit | ca. 30 sec. |

Bei vergleichenden Produktionen wurden folgende Unterschiede festgestellt:

PMMA mit 520 ppm Schwefel:

nach 16 Stunden Anlaufen der Werkzeuge, Produktionsunterbrechung zwecks Nachpolitur

PMMA mit 365 ppm Schwefel:

nach 26 Stunden Anlaufen der Werkzeuge, Produktionsunterbrechung zwecks Nachpolitur

PMMA ohne Schwefel:

kein Anlaufen der Werkzeuge.

Der schwarze Belag wurde durch REM-Analyse als Kupfersulfid identifiziert.
Weitere Vorteile und Ausführungsformen der Erfindung ergeben sich aus den nachfolgenden Patentansprüchen.

**Patentansprüche**

1. Verfahren zur Herstellung von Formkörpern aus thermoplastischer PMMA-Formmasse unter Einsatz von buntmetallhaltigen Werkzeugen, **dadurch gekennzeichnet, daß** die thermoplastische PMMA-Formmasse im wesentlichen schwefelfrei ist.

2. Verfahren nach Anspruch 1, **dadurch gekennzeichnet, daß** der Formkörper durch Spritzgießen hergestellt wird.

3. Verfahren nach Anspruch 1, **dadurch gekennzeichnet, daß** der Formkörper durch Formpressen hergestellt wird.

4. Verfahren nach einem oder mehreren der Ansprüche 1 bis 3,
   **dadurch gekennzeichnet,**
   **daß** die PMMA-Formmasse auf PMMA-Homo- und/oder -Copolymeren beruht, welche erhältlich sind durch die Polymerisation von

   (i) 80-100 Gew.-% Methylmethacrylat (MMA),

   (ii) 0-20 Gew.-% eines oder mehrerer ethylenisch ungesättigter mit (i) copolymerisierbarer Monomere, wobei (i) und (ii) zusammen 100 Gew.-% ergeben,

   (iii) 0,05-5 Gew.-%. bezogen auf 100 Gew.-% der Summe aus (i) und (ii), wenigstens eines im wesentlichen schwefelfreien Molekulargewichtsreglers, und

   (iv) bis 100 Gew.-% relativ zu der Summe aus (i) und (ii), für thermoplastische Formmassen übliche Zusätze,

   und welche ein durchschnittliches Gewichtsmittel des Molekulargewichts $\overline{M}_w$ im Bereich von $5 \times 10^4$ bis $2,5 \times 10^5$ aufweisen.

5. Verfahren nach Anspruch 4,
   **dadurch gekennzeichnet,**
   **daß**

   (ii) ausgewählt ist aus der Gruppe bestehend aus Acrylsäureestern, Methacrylsäureestern, die von (i) verschieden sind, Vinylacetat, Vinylchlorid, Vinylidenchlorid, Styrol, $\alpha$-Methylstyrol, halogensubstituierte Styrole, Vinylether, Isopropylether und Diene.

6. Verfahren nach Anspruch 4 oder 5,
   **dadurch gekennzeichnet,**
   **daß**

   (iii) dimeres $\alpha$-Methylstyrol, Enolether, aliphatischer und/oder cycloaliphatischer Aldehyde, Terpene, $\beta$-Terpinen, Terpinolen, 1,4-Cyclohexadien, 1,4 Dihydronaphthalin, 1,4,5,8-Tetrahydronaphthalin, 2,5-Dihydrofuran, 2,5-Dimethylfuran und 3,6-Dihydro-2H-pyran ist.

7. Verfahren nach Anspruch 4 bis 6,
   **dadurch gekennzeichnet,**
   **daß** (iii) in einer Menge im Bereich von 0,1 bis 2,0 Gew.-%, bezogen auf 100 Gew.-% der Komponenten (i) und (ii) vorhanden ist.

8. Verfahren nach einem oder mehreren der vorhergehenden Ansprüche,
   **dadurch gekennzeichnet,**
   **daß** der Regler (iii) dimeres $\alpha$-Methylstyrol ist.

9. Verfahren nach einem oder mehreren der vorhergehenden Ansprüche,
   **dadurch gekennzeichnet,**
   **daß** das Gewichtsmittel des Molekulargewichts $\overline{M}_w$ im Bereich von 8 x $10^4$ bis 2 x $10^5$ ist.

**Claims**

1. Process for producing mouldings from thermoplastic PMMA moulding composition using tools containing nonferrous metals, **characterised in that** the thermoplastic PMMA moulding composition is substantially sulphur-free.

2. Process according to claim 1, **characterised in that** the moulding is produced by injection moulding.

3. Process according to claim 1, **characterised in that** the moulding is produced by compression moulding.

4. Process according to one or more of claims 1 to 3, **characterised in that** the PMMA moulding composition is based on PMMA homo- and/or copolymers which may be obtained by the polymerisation of

   (i) 80-100 wt.% of methyl methacrylate (MMA),

   (ii) 0-20 wt.% of one or more ethylenically unsaturated monomers which are copolymerisable with (i),

   (i) and (ii) together making up 100 wt.%,

   (iii) 0.05-5 wt.%, based on 100 wt.% of the sum of (i) and (ii), of at least one substantially sulphur-free molecular weight regulator, and

   (iv) up to 100 wt.%, relative to the sum of (i) and (ii), of additives which are conventional for thermoplastic moulding compositions,

   and which have an average weight mean of the molecular weight $\overline{M}_w$ in the range from $5 \times 10^4$ to 2.5 x $10^5$.

5. Process according to claim 4, **characterised in that**

   (ii) is selected from among acrylic acid esters, methacrylic acid esters which are different from (i), vinyl acetate, vinyl chloride, vinylidene chloride, styrene, $\alpha$-methylstyrene, halogen-substituted styrenes, vinyl ether, isopropyl ether and dienes.

6. Process according to claim 4 or 5, **characterised in that**

   (iii) is dimeric $\alpha$-methylstyrene, enolether, aliphatic and/or cycloaliphatic aldehydes, terpenes, $\beta$-terpinene, terpinolene, 1,4-cyclohexadiene, 1,4-dihydronaphthalene, 1,4,5,8-tetrahydronaphthalene, 2,5-dihydrofuran, 2,5-dimethylfuran and 3,6-dihydro-2H-pyran.

7. Process according to claims 4 to 6, **characterised in that** (iii) is present in a quantity in the range from 0.1 to 2.0 wt.%, based on 100 wt.% of components (i) and (ii).

8. Process according to one of more of the preceding claims, **characterised in that** the regulator (iii) is dimeric $\alpha$-methylstyrene.

9. Process according to one of more of the preceding claims, **characterised in that** the weight mean of the molecular weight $\overline{M}_w$ is in the range from 8 x $10^4$ to 2 x $10^5$.

**Revendications**

1.  Procédé de production d'articles moulés à partir d'une masse à mouler de PMMA thermoplastique avec utilisation d'outils contenant des métaux non ferreux,
    **caractérisé en ce que**
    la masse à mouler de PMMA thermoplastique est essentiellement dépourvue de soufre.

2.  Procédé selon la revendication 1,
    **caractérisé en ce qu'**
    on produit l'article moulé au moyen d'un moulage par injection.

3.  Procédé selon la revendication 1,
    **caractérisé en ce qu'**
    on produit l'article moulé par un moulage par pression.

4.  Procédé selon une ou plusieurs des revendications 1 à 3,
    **caractérisé en ce que**
    la masse à mouler en PMMA repose sur les homo- et/ou copolymères de PMMA que l'on obtient par polymérisation de

    (i) 80 à 100 % en poids de méthacrylate de méthyle (MMA).
    (ii) O à 20 % en poids d'un ou plusieurs monomères éthyléniquement Insaturés copolymérisables avec (i), où (i) et (ii) donnent ensemble 100 % en poids,
    (iii) de 0,05 à 5 % en poids, par rapport à 100 % en poids de la somme de (i) et de (ii). au moins un régulateur de poids moléculaire essentiellement dépourvu de soufre et
    (iv) jusqu'à 100 % en poids, relativement à la somme de (i) et de (ii), d'additifs habituels pour les masses à mouler thermoplastiques,

    et qui présentent une moyenne pondérale du poids moléculaire $M_w$ allant de $5 \times 10^4$ à $2,5 \times 10^5$.

5.  Procédé selon la revendication 4,
    **caractérisé en ce que**

    (ii) est choisi dans le groupe constitué par les esters d'acryliques d'acide méthacrylique qui diffèrent de (i), l'acétate de vinyle, le chlorure de vinyle, le chlorure de vinylidène, le styrène, l'alpha-méthylstyrène. l'alpha-méthylstyrène, le styrène halogéno-substitué, l'éther vinylique, l'éther isopropylique et les diènes.

6.  Procédé selon la revendication 4 ou 5,
    **caractérisé en ce que**

    (iii) représente l'alpha-méthyl styrène dimère, l'énol éther d'aldéhyde aliphatique et/ou cycloaliphatique, les terpènes. les bêta-terpinènes. les terpénols. le 1,4-cyclohexadiène, le 1,4-dihydronaphtalène, le 1,4,5,8-tétrahydronaphtalène, le 2,5-dihydrofuranne, le 2,5-diméthylfuranne et/ou le 3,6-dihydro-2H-pyrane.

7.  Procédé selon l'une des revendications 4 à 6,
    **caractérisé en ce que**

    (iii) est présent en une quantité allant de 0.1 à 2,0 % en poids, par rapport à 100 % en poids des composants (i) et (ii).

8.  Procédé selon une ou plusieurs des revendications précédentes,
    **caractérisé en ce que**
    le régulateur (iii) est l'alpha-méthyl styrène dimère.

9.  Procédé selon une ou plusieurs des revendications précédentes,
    **caractérisé en ce que**
    la moyenne pondérale du poids moléculaire $M$w est dans un intervalle allant de $8 \times 10^4$ à $2 \times 10^5$.

Fig. 1

Fig. 2

Fig. 3

Fig. 4

1 μm 10.1 kV 1.00E4 0002/00 E179IMT

Fig. 5

1 μm 10.1 kV 2.00E4 0002/00 E203IMT

Fig. 6

1 μm 10.1 kV 2.00E4 0001/00 E217IMT

Fig. 7

Fig. 8

Fig. 9